# EUROPÄISCHE PATENTANMELDUNG

(11) **EP 0 744 445 A2**
(43) Veröffentlichungstag der Anmeldung: **27.11.1996**
(21) Anmeldenummer: 96105388.1
(22) Anmeldetag: 04.04.1996
(51) Int. Cl.: C08L 101/00

(54) **Verwendung von wasserunlöslichen Copolymeren des Maleinimids und seiner Derivate als hochmolekulare Verbindungen mit mikrobicider Wirkung in Kunststoffen**

(30) Priorität: 23.05.1995 DE 19518918
(71) Anmelder: HÜLS AKTIENGESELLSCHAFT, 45764 Marl (DE)
(72) Erfinder: Hill, Frank, Dr., 40822 Mettmann (DE)

(57) **Zusammenfassung**

Verwendung von wasserunlöslichen Copolymerisaten aus Maleinimid und/oder dessen Derivaten und vinylanalogen Monomeren in Kunststoffen zur Erzielung einer mikrobiziden Wirkung.

## Beschreibung

Auch Kunststoffe werden unter geeigneten Bedingungen von Mikroorganismen besiedelt. Auf Kunststoffolien wie z. B. feuchten PVC Duschvorhängen bildet sich ein rosafarbener Film des Pilzes Fusarium. Auf Fugendichtmassen, Tapeten etc. wächst ein schwarzer Schimmel von Aspergillus spec.. Auf Gummidichtungen am Auto wachsen blau-grüne Algen (Cyanobacteria). Auf Zahnersatz und Kunststoffüllung bilden sich wie auf natürlichen Zähnen Plaques von Streptococcus mutans. Auf Kathetern und implantierten Kunststoffartikeln siedeln bevorzugt Mutanten von Staphylococcus epidermidis. Die genannten Stämme vertragen die besonderen Anforderungen des speziellen Standortes und haben besondere Adhäsionsmechanismen entwickelt.

In vielen technischen Anwendungen ist jedoch eine Besiedlung von Kunststoffen unerwünscht und die für den mikrobiellen Bewuchs anfälligen Produkte werden durch zugesetzte niedermolekulare Mikrobizide antimikrobiell ausgerüstet. Es gibt viele eingeführte Biocide, die in diesem Bereich eingesetzt werden. Dabei handelt es sich um ausgesuchte stabile Mikrobizide, die Kunststoffen, Lacken und Dispersionen zugesetzt werden, um sie vor mikrobiologischem Befall zu schützen. Sie sind vorzugsweise niedermolekular mit einem Molekulargewicht < 500 Dalton.

Das Vorhandensein dieser Stoffe in einem Polymer kann einfach durch einen Agardiffusionstest nachgewiesen werden. Ein Stückchen Plastik, Lackfilm oder Dispersion auf einen Indikatoragar aufgelegt oder aufgetropft, hemmt einen sensitiven Indikatorkeim, was durch einen klaren Hemmhof um die aufgelegte Probe herum nach einer bestimmten Bebrütungszeit angezeigt wird.

Ein Vorteil von antimikrobiellen Polymeren, die in Wasser unlöslich sind und die einen mikrobiciden Effekt nur bei einem direkten (Oberflächen)kontakt von Polymer und Mikroorganismus haben, ist es, daß sie eine reduzierte oder sogar keine Migration aufweisen. Ihre Wirkung ist dann vorzugsweise im Suspensionstest nach einem direkten Kontakt von Polymer und suspendierten Mikroorganismen nachweisbar. Bisher sind solche Wirkstoffe unter den polymeren kationischen Verbindungen bekannt.

Einen Überblick über die antimikrobiellen Eigenschaften von polymeren Kationen findet sich in der Literatur (T. Ikeda, in High performance biomaterials, H. Szycher Hrsgb., Technomic Publish. Co., Lancaster, PE, 1991 p. 743 - 763).

Durch Steigerung der Lipophilie und der Molmasse von polymeren quaternären Ammoniumverbindungen konnte eine mikrobicide Wirkung auch nach 1 Jahr Lagerung des beschichteten Materials gezeigt werden (N. Nurdin, G. Helary, G. Sauvet, in J. Appl. Polym. Sci. 50, 671 - 678, 1993).

Wasserunlösliche Polymere mit biociden Eigenschaften haben verschiedene Anwendungsgebiete, von denen die Verpackung von Lebensmitteln und die Verwendung in der Medizintechnik erwähnt seien.

Eine besonders wichtige Anwendung für wasserunlösliche polymere Biocide wäre die biocide Ausrüstung von Kunststoffen in der Medizintechnik, wie z. B. die Verhinderung der sogenannten Biofilmbildung auf Kunststoffkathetern, die häufig zu Bakteriämien bei Patienten führt (L. Baldassari et al., J. Material. Sci. Material. Medic 5, 601 - 605, 1994). Hierbei ist ein langsames oder vollständig unterdrücktes Migrieren des Wirkstoffes von großem Interesse.

Es ist bekannt, daß das monomere Maleinimid und einige seiner Derivate mikrobicide Eigenschaften besitzt und ist in einigen Fungiciden und Baktericiden als wirksame Gruppierung enthalten. Die antivirale, antibakterielle und antifungische Wirkung von 82 verschiedenen Maleinimiden und Succinimiden wurde in der Literatur untersucht (CA 102 12085). Die Wirksamkeit von 11 der untersuchten Derivate reicht bis an diejenige des bekannten Biocids Pentachlorphenol heran (Y. Igarashi et al., J. Industrial Microbiol. 6, 223 - 225, 1990). Gram-positive Bakterien wie Bacillus subtilis und Staphylococcus aureus wurden gehemmt. Gram-negative Bakterien wie Escherichia coli werden ebenfalls gehemmt, dagegen wird Pseudomonas aeruginosa nicht gehemmt (S. Watanabe, Y. Igarashi, K. Yagami, Pesticide Sci. 34, 99 - 104, 1992). Die US-PS 4 141 905 (Fa. Abbott Laboratories) beansprucht das N-2-Methyl-1-naphthylmaleinimid als wirksames Fungicid. Ein Methylmaleinimid (=Citraconimid) wird in der CS-PS 276 177 (CA 115 108 558) beansprucht).

Auch über synergistische Wirkung von Maleinimiden mit anderen Biociden wie Isothiazolon und N-2,6-Diethylphenylmaleinimid wurde berichtet (CA 120 4394 und 112 93958).

Für eine Anwendung in sensiblen Bereichen, wie der Lebensmittelverpackung oder der Medizintechnik, sind die üblichen Zusätze von Biociden ungeeignet, da sie durch ihr geringes Molekulargewicht in und aus der Folie migrieren können. In der Anwendung von Kunststoffen bei der Verpackung von Lebensmitteln oder in der Medizintechnik ist diese Eigenschaft sehr störend, denn dabei kann das verpackte Lebensmittel oder die Infusionslösung oder bei implantierten Kunststoffteilen das Zellgewebe mit dem Biocid kontaminiert werden.

Eine weitere Anforderung an die Biocide in technischen Kunststoffartikeln ist die hohe Wärmestabilität. Die Hemmstoffe müssen die bei der Verarbeitung von Thermoplasten auftretenden Temperaturen vertragen, z. B. bei der Blasextrusion von Folien aus Weich-PVC ca. 160 °C.

Aufgabe der vorliegenden Erfindung war es, ein wasserunlösliches Polymer mit mikrobicider Wirkung herzustellen, das im Agardiffusionstest praktisch keine Wirkung gegen Mikroorganismen zeigt, aber im Suspensionstest bei direktem Kontakt mit suspendierten Mikroorganismen inaktivierend auf die Lebensfähigkeit von Mikroorganismen wirkt.

Aufgabe der vorliegenden Erfindung war es ebenfalls, einen hochmolekularen Wirkstoff herzustellen, der mit Standardpolymeren wie PVC, PE, PP, Polyamid, Polystyrol als auch mit Copolymeren etc. verträglich und temperaturstabil ist und durch Compoundieren und Extrudieren in diese Kunststoffe eingearbeitet werden kann. Die Oberfläche des Kunststoffteils soll durch die Zumischung des hochmolekularen Wirkstoffes mikrobizide Eigenschaften erhalten, die auch unter Keimbelastung und Kontakt mit Wasser oder Fett oder natürlichen Emulgatoren oder Proteinen erhalten bleibt und keine nenneswerte Migration zeigt.

Es wurde gefunden, daß wasserunlösliche Copolymerisate von Maleinimid und seinen Derivaten und vinylanalogen Monomeren, die durch radikalische Polymerisation in Masse oder in Lösemitteln mit den Monomeren wie Acrylat- und/oder Methacrylestern, Vinylacetat, Vinylchlorid, Vinylethern, Acrylnitril, Allylethern, Styrol und Styrolderivaten erhalten werden, eine intrinsische antimikrobielle Aktivität, die durch direkten Kontakt des Polymers mit Mikroorganismen gemessen werden kann, aufweisen.

Gegenstand der vorliegenden Erfindung ist die Verwendung von wasserunlöslichen Copolymerisaten aus Maleinimid und/oder dessen Derivaten und vinylanalogen Monomeren in Kunststoffen zur Erzielung einer mikrobiziden Wirkung.

Die Migration des mikrobiziden Wirkstoffes, die bei bestimmten Comonomerkombinationen noch vorhanden ist, kann durch Zusatz eines weiteren (dritten) vernetzend wirkenden mindestens bifunktionellen Comonomeren verhindert werden.

Dazu eignen sich insbesondere Diethylenglykoldivinylether, Hexandiol-1,6-divinylether, Polyethylenglykol-200-divinylether, Divinylbenzol, N,N-Methylenbisacrylamid u. a.

Blends mit handelsüblichen Kunststoffen, wie PVC, PE, Polyamiden, Polyurethanen und anderen besitzen eine langandauernde mikrobizide Aktivität, die nicht mit Wasser extrahierbar ist und Temperaturstabilität aufweist.

Die folgenden Beispiele sollen die Erfindung erläutern:

### Beispiel 1

In einem mit einer Gummimembran verschließbaren Gefäß werden 5 ml Aceton, 2 g Diethylenglykoldivinylether und 1,94 g Maleinimid vorgelegt und mit Stickstoff begast. Die Polymerisation wird durch die Injektion von 200 µl Aceton mit 25 mg Azobisisobutyronitril gestartet und das Gefäß wird für 16 h bei 60 °C gehalten. Dann wird mit 10 ml Diethylether versetzt, der feste Niederschlag wird abfiltriert, mit Methanol gewaschen und bei reduziertem Druck getrocknet. Das trockene Produkt wird ausgewogen und in der Messermühle fein gemahlen.

### Beispiel 2

**a) Bestimmung der diffundierbaren antimikrobiellen Aktivität.**
   100 mg des Polymers werden zunächst 3 x mit je 5 ml Wasser gewaschen, das feuchte Polymer wird dann in einen kleinen Glaszylinder ohne Boden übertragen, der auf einer mit Klebsiella pneumoniae beimpften MRS-Agarplatte aufgesetzt ist. Es wird 24 h bei 37 °C bebrütet. Die Breite des Hemmhofs um den Glaszylinder beträgt ca. 1 mm.
**b) Bestimmung der nicht diffundierbaren antimikrobiellen Aktivität.**
   100 mg des gewaschenen feuchten Polymers werden zu 5 ml Bakteriensuspension gegeben (Klebsiella pneumoniae mit einer Zellkonzentration von 106 KBE/ml in Phosphat gepufferter Saline ,m/20 KPO4 pH 7,5 + 0,8 % NaCl + 1 mg Rinderserumalbumin/ml). Es wird bei 30 °C geschüttelt und nach 6 h wird durch Plattieren die Keimzahl bestimmt. Der Prozentsatz der überlebenden Keime war 0,1 %.

### Beispiel 3: Herstellung weiterer Copolymere

Es werden Polymerpulver wie in Beispiel 1 beschrieben hergestellt, mit der Abänderung, daß das Comonomer Methylmethacrylat durch Vinylacetat, Butylacrylat, Hydroxyethylmethacrylat, Styrol oder Acrylnitril ersetzt wurde. Die antimikrobielle Wirkung dieser Polymere ist in der Tabelle 1 wiedergegeben.

**Tabelle 1**

| **Mikrobicide Wirkung von Maleinimid Copolymerisaten** | | |
|---|---|---|
| **Monomere** | **Agardiffusion** ***)** | **Suspensionstest** ****)** |
| Methylmethacrylat/Maleinimid | 5 mm | 40 % |
| Diethylenglykoldivinylether/Maleinimid | 0 mm | ca. 90 % |
| PEG-1000-dimethacrylat/Maleinimid | 0 mm | ca. 90 % |
| Hydroxymethylmethacrylat/Maleinimid | 8 mm | 0,01 % |
| Hexandiol-1,6-divinylether/Maleinimid | 0 mm | 90 % |
| PEG-200-divinylether/Maleinimid | 0 mm | 0,1 % |
| Butylacrylat/Maleinimid | 15 mm | 0,01 % |
| Styrol/Maleinimid | 2 mm | 50 % |
| Acrylnitril/Maleinimid | 10 mm | 0,01 % |
| Vinylacetat/Maleinimid | 0 mm | 90 % |

| | | |
|---|---|---|
| *) Hemmzone mit Staphylococcus epidermidis auf MRS-Agar | | |
| **) Prozentsatz der überlebenden Keime von Klebsiella pneumoniae nach 6 h Kontaktzeit bei 30 °C | | |

### Beispiel 4

Bestimmung des mittleren Molekulargewichts von Maleinimid-haltigen Copolymeren.

Mit der Methode der Gelpermeationschromatographie wird die Molekulargewichtsverteilung des MMA/MI-Copolymeren bestimmt. Monomere Bestandteile waren nicht vorhanden, 1,2 % Gew.-% hatten eine Molmasse < 1 000. 98,6 % hatten eine Molmasse von < 5 000. Das mittlere Molgewicht war 2 130.

### Beispiel 5: Herstellung eines vernetzten mikrobiciden Polymers mit reduzierter Wirkung im Agardiffusionstest

Es wird ein Ansatz wie in Beispiel 1 beschrieben gemacht, mit der Abänderung, daß ein drittes vernetzendes Comonomer in Form von 0,32 g Diethylenglykoldivinylether (bzw. PEG-200-divinylether oder Hexandiol-1,6-divinylether) vorgelegt wurde. Es wurde wie beschrieben polymerisiert und aufgearbeitet. Die Copolymere zeigten im Test nach Beispiel 2 a eine geringe diffundierende antimikrobielle Aktivität und eine verschieden starke Kontaktinaktivierung auf eine gewaschene Zellsuspension von Klebsiella pneumoniae (Tabelle 2).

**Tabelle 2**

| **Microbicide Wirkung Von Copolymeren des Maleinimid mit vinylanalogen Monomeren, die zusätzlich vernetzt wurden** | | |
|---|---|---|
| **Monomere** | **Agardiffusion** | **Suspensionstest *)** |
| Butylacrylat | 1 mm | ca. 10 % |
| Maleinimid | | |
| PEG-200-divinylether | | |
| Butylacrylat | 1 mm | 100 % |
| Maleinimid | | |
| Hexandiol-1,6-divinylether | | |
| Acrylnitril | 0,5 mm | ca. 20 % |
| Maleinimid | | |
| Diethylenglykoldivinylether | | |
| Acrylnitril | 0,5 mm | 0,01 % |
| N-Ethylmaleinimid | | |
| Hexandiol-1,6-divinylether | | |

**Tabelle**

| **Forsetzung** | | |
|---|---|---|
| **Monomere** | **Agardiffusion** | **Suspensionstest** ***)** |
| HEMA | 1 mm | ca. 30 % |
| Maleinimid | | |
| Diethylenglykoldivinylether | | |
| HEMA | 0 mm | ca. 20 % |
| Maleinimid | | |
| PEG-200-divinylether | | |
| HEMA | 1 mm | 100 % |
| Maleinimid | | |
| Hexandiol-1,6-divinylether | | |

| | | |
|---|---|---|
| *) Prozentsatz überlebender Zellen nach 6 h Kontaktzeit mit dem Polymerpulver | | |

### Beispiel 6: Herstellung einer antimikrobiell ausgerüsteten Polymerfolie

1 g Weich-PVC-Pulver wird mit 20 mg des Copolymers Polymaleinimidcobutylacrylat versetzt und in heißem Tetrahydrofuran gelöst. Die Lösung wird in eine Glasschale gegossen und das Lösemittel wird 2 Tage bei Raumtemperatur und 1 weiteren Tag bei vermindertem Druck und 45 °C abgedampft. Aus der erhaltenen Folie wird ein 3 cm x 3 cm großes Stück herausgeschnitten und in MRS-Nährlösung gegeben, die mit 10³ KBE/ml des Bakterienstammes Staphylococcus epidermidis beimpft wird. Nach 24 h Bebrütung bei 30 °C unter Schütteln wird die Folie mit sterilem Wasser unter leichtem Umschwenken dreimal gespült. Dann wird in 5 ml steriler Saline kräftig geschüttelt und die Anzahl der von der Folie abgelösten Zellen wird durch Plattieren auf MRS-Nähragar bestimmt. Als Kontrolle dient eine Folie, die ohne den Zusatz des Copolymers hergestellt wird. Während von der Kontrollfolie 2,9 x 10⁴ KBE/ml abgelöst werden konnten, war bei der mit dem baktericiden Copolymer ausgerüsteten Folie nur 3,7 x 10² KBE von dem Polymer ablösbar.

### Beispiel 7: Herstellung mikrobicider Copolymere mit Derivaten des Maleinimids

Es werden Polymere wie in Beispiel 1 beschrieben hergestellt mit der Abänderung, daß das Comonomer Maleinimid durch eine äquimolare Menge an N-Methylmaleinimid, N-Ethylmaleinimid, N-Phenylmaleinimid, n-Cyclohexylmaleinimid und N-Hydroxymaleinimid ersetzt wird. Die antimikrobielle Aktivität dieser Copolymere ist in der Tabelle 3 wiedergegeben.

| **Monomere** | **Agardiffusion Hemmhof (mm)** | **Suspensionstest Überlebensrate (%)** |
|---|---|---|
| N-Methylmaleinimid/Butylacrylat | 0,5 | 44 |
| N-Ethylmaleinimid/Butylacrylat | 1 | 41,7 |
| N-Cyclohexylmaleinimid/Butylacrylat | 0 | 25 |
| N-Phenylmaleinimid/Butylacrylat | 0 | 12 |
| N-Hydroxymaleinimid/Butylacrylat | -keine Polymerisationsreaktion - | |

### Beispiel 8: Stabilität des antibakteriellen Copolymers gegen Serumprotein

Da die übliche Reaktion der monomeren Maleinimide mit Bausteinen von Zellen in der Bindung von Sulfhydrylgruppen von Proteinen besteht, wurde geprüft, ob die antibakterielle Aktivität des Copolymeren Polymaleinimidcobutylacrylat durch eine Vorinkubation mit Rinderserumalbumin aufgehoben wird. Dazu wurden 100 mg des Copolymers für 24 h in 5 ml einer Lösung von 5 mg/ml Rinderserumalbumin bei Raumtemperatur geschüttelt. Es wird zentrifugiert und gewaschen, anschließend wird, wie in Beispiel 2 a und 2 b beschrieben, die Hemmung bzw. Inaktivierung von Klebsiella pneumoniae bestimmt.

Der Hemmhof im Agardiffusionstest nahm durch die Inkubation mit Rinderserumalbumin von 4 mm auf 1 mm ab, die Überlebensrate nach dem 6 h Kontakt zwischen Zellsuspension und Copolymer war unverändert < 0,1 %.

## Patentansprüche

1. Verwendung von wasserunlöslichen Copolymerisaten aus Maleinimid und/oder dessen Derivaten und vinylanalogen Monomeren in Kunststoffen zur Erzielung einer mikrobiziden Wirkung.

2. Verwendung nach Anspruch 1,
dadurch gekennzeichnet,
daß die Copolymerisate weitere vernetzend wirkende mindestens bifunktionelle Comonomere enthalten.

3. Verwendung nach mindestens einem der Ansprüche 1 bis 2,
dadurch gekennzeichnet,
daß als vinylanaloge Monomere Acrylat- und/oder Methacrylester, Vinylacetat, Vinylchlorid, Vinylether, Acrylnitril, Allylether, Styrol und Styrolderivate, eingesetzt werden.

4. Verwendung nach mindestens einem der Ansprüche 1 bis 3,
dadurch gekennzeichnet,
daß die Copolymerisate durch radikalische Polymerisation erhalten werden.

5. Verwendung nach mindestens einem der Ansprüche 1 bis 4,
dadurch gekennzeichnet,
daß die Copolymerisate in Kunststoffgegenständen in der Medizintechnik eingesetzt werden.

6. Verwendung nach mindestens einem der Ansprüche 1 bis 5,
dadurch gekennzeichnet,
daß Kunststoffe wie Polyethylen, Polypropylen, Polyamid und Polystyrol enthalten sind.
